(19) **Europäisches Patentamt / European Patent Office / Office européen des brevets**

(11) **EP 4 570 518 A1**

(12) **EUROPEAN PATENT APPLICATION**
published in accordance with Art. 153(4) EPC

(43) Date of publication:
**18.06.2025 Bulletin 2025/25**

(21) Application number: **23852244.5**

(22) Date of filing: **19.06.2023**

(51) International Patent Classification (IPC):
**B60C 9/17** (2006.01) **B60C 5/00** (2006.01)
**B60C 9/07** (2006.01)

(52) Cooperative Patent Classification (CPC):
**B60C 5/00; B60C 9/02; B60C 9/07; B60C 9/08; B60C 9/17**

(86) International application number:
**PCT/JP2023/022620**

(87) International publication number:
**WO 2024/034260 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.08.2022 JP 2022126657**

(71) Applicant: **BRIDGESTONE CORPORATION**
**Chuo-ku**
**Tokyo 104-8340 (JP)**

(72) Inventors:
• **KUWAYAMA, Isao**
  **Tokyo 104-8340 (JP)**
• **SHIMURA, Takashi**
  **Tokyo 104-8340 (JP)**

(74) Representative: **Marks & Clerk LLP**
**15 Fetter Lane**
**London EC4A 1BW (GB)**

(54) **PNEUMATIC RADIAL TIRE FOR PASSENGER CARS**

(57) Provided is a pneumatic radial tire for passenger vehicles in which the cross-sectional width SW of the tire and the outer diameter OD of the tire satisfy a predetermined relationship, the carcass has a first tire widthwise portion in which the carcass cords are in a radial arrangement and a second tire widthwise portion in which the carcass cords extend at an angle to the tire circumferential direction, the second tire widthwise portion is located in a tire width-direction half which is on the inner side when the tire is mounted on a vehicle, and the carcass cords of the carcass body portion in the second tire widthwise portion and the belt cords extend in a direction that intersects each other when viewed from the outer side in the tire radial direction.

*FIG. 4*

Outer side when mounted on vehicle — Inner side when mounted on vehicle

## Description

TECHNICAL FIELD

This disclosure relates to a pneumatic radial tire for passenger vehicles.

BACKGROUND

As a pneumatic radial tire for passenger vehicles with improved fuel efficiency, the applicant has proposed a pneumatic radial tire for passenger vehicles with narrow width and large diameter having a predetermined relationship between the cross-sectional width SW and the outer diameter OD of the tire (e.g., PTL 1). In addition, in a pneumatic radial tire for passenger vehicles with narrow width and large diameter, in order to reduce weight and further improve fuel efficiency, it has also been proposed that only one inclined belt layer be used, in which the belt cords are inclined with respect to the tire circumferential direction (see, for example, PTL 2).

CITATION LIST

Patent Literature

PTL 1: WO 2011/135774 A1
PTL 2: JP 2020-093674 A

SUMMARY

(Technical Problem)

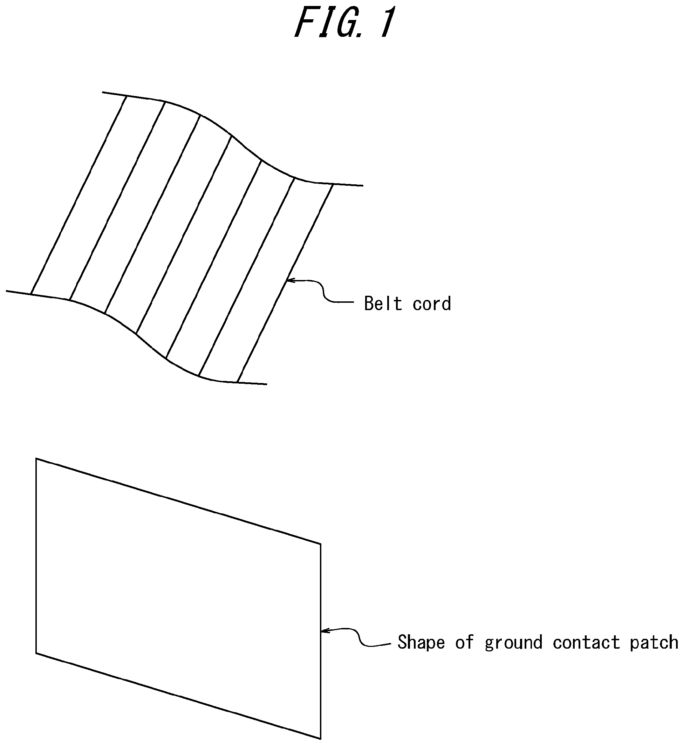

However, when only one inclined belt layer is used, because the stiffness in the extending direction of the belt cords will be high and the tread rubber will not be able to stretch in that direction, as schematically illustrated in Figure 1, the shape of the ground contact patch will become worse, which could lead to uneven wear on the tire as wear was promoted in a tire width-direction half which is on the inner side when the tire is mounted on a vehicle. In particular, the fact that the cross-sectional width SW of the tire is small, and the fact that the pneumatic radial tire for passenger vehicles with narrow width and large diameter, such as those mentioned above, is often used at high internal pressures, were also causes of the deterioration of the shape of the ground contact patch.

Therefore, an object of the present disclosure is to provide a pneumatic radial tire for passenger vehicles that can reduce the weight of the tire by having only one inclined belt layer, while also improving the shape of the ground contact patch to control occurrence of uneven wear of the tire.

(Solution to Problem)

The gist of the present disclosure is as follows.

(1) A pneumatic radial tire for passenger vehicles, comprising

a pair of bead portions;
a carcass consisting of one or more carcass plies made of rubber-coated carcass cords; and
a belt consisting of only one inclined belt layer consisting of a belt ply made of rubber-coated belt cords that extend at an angle to a tire circumferential direction, arranged on an outer side in a tire radial direction of a crown portion of the carcass, wherein
a cross-sectional width SW of the tire is less than 165 (mm),
a ratio of the cross-sectional width SW of the tire to an outer diameter OD of the tire is 0.26 or less, or the cross-sectional width SW (mm) of the tire and the outer diameter OD (mm) of the tire satisfy a relational expression: OD $(mm) \geq -0.0187 \times SW (mm)^2 + 9.15 \times SW (mm) - 380 (mm)$,
the carcass has a first tire widthwise portion in which the carcass cords are in a radial arrangement, and a second tire widthwise portion in which the carcass cords extend at an angle to the tire circumferential direction,
the carcass has a carcass body portion that extends from the bead portion to an inner side in the tire radial direction of the belt,

the second tire widthwise portion is located in a tire width-direction half which is on the inner side when the tire is mounted on a vehicle, and

the carcass cords of the carcass body portion in the second tire widthwise portion and the belt cords extend in a direction that intersects each other when viewed from the outer side in the tire radial direction.

As used herein, the term "rim" refers to the standard rim in the applicable size (Measuring Rim in ETRTO's STANDARDS MANUAL and Design Rim in TRA's YEAR BOOK) as described or as may be described in the future in the industrial standard, which is valid for the area in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim" of the "wheel" mentioned above includes current sizes as well as sizes as described in the future in the aforementioned industrial standards. An example of the "sizes as described in the future" could be the sizes listed as "FUTURE DEVELOPMENTS" in the ETRTO 2013 edition.), however, for sizes not listed in these industrial standards, the term "rim" refers to a rim with a width corresponding to the bead width of the tire.

In addition, the term "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the term "prescribed internal pressure" refers to the air pressure (maximum air pressure) corresponding to the maximum load capacity specified for each vehicle in which the tire is mounted.

In addition, the term "maximum load" refers to the load corresponding to the maximum load capacity described above.

(Advantageous Effect)

According to the present disclosure, it is possible to provide a pneumatic radial tire for passenger vehicles that can reduce the weight of the tire by having only one inclined belt layer, while also improving the shape of the ground contact patch to control occurrence of uneven wear of the tire.

BRIEF DESCRIPTION OF THE DRAWINGS

In the accompanying drawings:

FIG. 1 is a drawing schematically illustrating the shape of the ground contact patch when a tire has only one inclined belt layer;
FIG. 2 is a schematic drawing illustrating the cross-sectional width SW and the outer diameter OD of a tire;
FIG. 3 is a cross-sectional view in the tire width direction of a pneumatic radial tire for passenger vehicles in accordance with one embodiment of the present disclosure;
FIG. 4 is a drawing schematically illustrating the structure of a carcass, a belt, and a cap layer;
FIG. 5 is a drawing schematically illustrating another carcass structure;
FIG. 6 is a drawing schematically illustrating the improvement in the shape of the ground contact patch;
FIG. 7 is a drawing schematically illustrating another example of the structure of a carcass, a belt, and a cap layer;
FIG. 8 is a drawing that explains the arrangement of RFID; and
FIG. 9 is a cross-sectional view in the tire width direction of a pneumatic radial tire for passenger vehicles in a modified example.

DETAILED DESCRIPTION

Hereinafter, embodiments of the present disclosure will be described in detail with reference to the drawings.

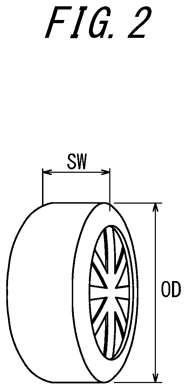

Figure 2 is a schematic drawing illustrating the cross-sectional width SW and the outer diameter OD of a tire.
A pneumatic radial tire for passenger vehicles in accordance with one embodiment of the present disclosure (hereinafter, simply referred to as a "tire") has a cross-sectional width SW of the tire of less than 165 mm, a ratio of the cross-sectional width SW to the outer diameter OD of the tire, SW/OD, of 0.26 or less, and thus has a shape of narrow width and large diameter. By making the cross-sectional width SW of the tire narrower relative to the outer diameter OD of the tire, air resistance can be reduced, and by making the outer diameter OD of the tire larger relative to the cross-sectional width SW of the tire, the deformation of the tread rubber in the area around the ground contact patch of the tire is controlled and rolling resistance can be reduced, and by these means, the fuel efficiency of the tire can be improved. The ratio SW/OD is preferably 0.25 or less, and it is more preferable to be 0.24 or less.
The above ratio is preferably satisfied when the internal pressure of the tire is 200 kPa or more, and is more preferably satisfied when the internal pressure of the tire is 220 kPa or more, and is even more preferably satisfied when the internal pressure of the tire is 280 kPa or more. This is because the rolling resistance can be reduced. On the other hand, it is preferable that the above ratio is satisfied when the internal pressure of the tire is 350 kPa or less. This is because the ride comfort can be improved.

Here, the cross-sectional width SW of the tire is preferably 105 to 145 mm, and it is more preferable to be 115 to 135 mm.

In addition, the aspect ratio of the tire is preferably 45 to 70 when the cross-sectional width SW and the outer diameter OD of the tire satisfy the above ratio, and it is more preferable to be 45 to 65.

The specific tire size is not particularly limited, but may be, for example, any of 105/50R16, 115/50R17, 125/55R20, 125/60R18, 125/65R19, 135/45R21, 135/55R20, 135/60R17, 1 35/60R18, 135/60R19, 135/65R19, 145/45R21, 145/55R20, 145/60R16, 145/60R17, 145/60R18, 145/60R19, 145/65R 19, 155/45R18, 155/45R21, 155/55R18, 155/55R19, 155/55R21, 155/60R17, 155/65R18, 155/70R17, 155/70R19.

Alternatively, the cross-sectional width SW of the tire is less than 165 mm, the cross-sectional width SW (mm) and the outer diameter OD (mm) of the tire satisfy the relational expression:

$$OD \ (mm) \geq -0.0187 \times SW \ (mm)^2 + 9.15 \times SW \ (mm) - 380,$$

and thus the tire has a shape with narrow width and large diameter.

By satisfying the above relational expression, it is possible to reduce air resistance and rolling resistance, thereby improving the fuel efficiency of the tire.

In the third aspect, with respect to the cross-sectional width SW and the outer diameter OD of the tire, while satisfying the above relational expression, the ratio SW/OD is preferably 0.26 or less, more preferably 0.25 or less, and even more preferably 0.24 or less. This is because the fuel efficiency of the tire can be further improved.

The above relational expression and ratio are preferably satisfied when the internal pressure of the tire is 200 kPa or more, and more preferably satisfied when the internal pressure of the tire is 220 kPa or more, and even more preferably satisfied when the internal pressure of the tire is 280 kPa or more. This is because the rolling resistance can be reduced. On the other hand, it is preferable that the above relational expression and ratio is satisfied when the internal pressure of the tire is 350 kPa or less. This is because the ride comfort can be improved.

Here, the cross-sectional width SW of the tire is preferably 105 to 145 mm, and it is more preferable to be 115 to 135 mm.

In addition, the aspect ratio of the tire is preferably 45 to 70 when the cross-sectional width SW and the outer diameter OD of the tire satisfy the above relationship, and it is more preferable to be 45 to 65.

The specific tire size is not particularly limited, but may be, for example, any of 105/50R16, 115/50R17, 125/55R20, 125/60R18, 125/65R19, 135/45R21, 135/55R20, 135/60R17, 1 35/60R18, 135/60R19, 135/65R19, 145/45R21, 145/55R20, 145/60R16, 145/60R17, 145/60R18, 145/60R19, 145/65R 19, 155/45R18, 155/45R21, 155/55R18, 155/55R19, 155/55R21, 155/60R17, 155/65R18, 155/70R17, 155/70R19.

The tire of this embodiment is a pneumatic radial tire for passenger vehicles. This tire is particularly well-suited for use as a tire for vehicles for personal mobility.

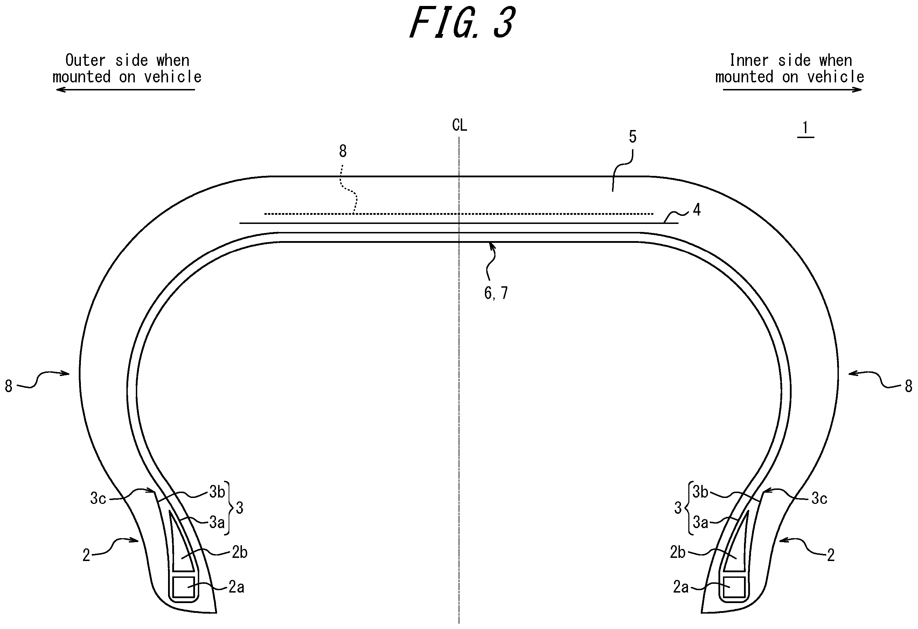

Figure 3 is a cross-sectional view in the tire width direction of a pneumatic radial tire for passenger vehicles in accordance with one embodiment of the present disclosure. Figure 3 illustrates a cross-sectional view of the tire in its reference condition, with the tire mounted on the rim, filled with the prescribed internal pressure, and unloaded. As illustrated in Figure 3, this tire 1 comprises a carcass 3 consisting of one or more carcass plies made of rubber-coated carcass cords. In addition, this tire 1 comprises a belt 4 consisting of only one inclined belt layer consisting of a belt ply made of rubber-coated belt cords that extend at an angle to the tire circumferential direction and a tread 5, in order, on the outer side in the tire radial direction of a crown portion of the carcass 3.

In this example, bead cores 2a are embedded in each of the bead portions 2. In this disclosure, the cross-sectional shape and material of the bead core 2a are not particularly limited, and can be made to have a configuration that is normally used in pneumatic radial tires for passenger vehicles. In this disclosure, the bead core 2a can be divided into a plurality of small bead cores. Alternatively, in the present disclosure, the bead portion 2 can be configured without a bead core 2a.

In the illustrated example, the tire 1 has a bead filler 2b with a roughly triangular cross-section on the outer side in the tire radial direction of the bead core 2a. The cross-sectional shape of the bead filler 2b is not limited to this example, and the material is not limited either. Alternatively, the tire can be made lighter by omitting the bead filler 2b.

In this embodiment, the tire 1 may also have a rim guard. In addition, in this embodiment, the bead portion 2 can also have additional members such as rubber layers or cord layers for the purpose of reinforcement, etc. These additional members can be provided in various positions relative to the carcass 3 and the bead filler 2b.

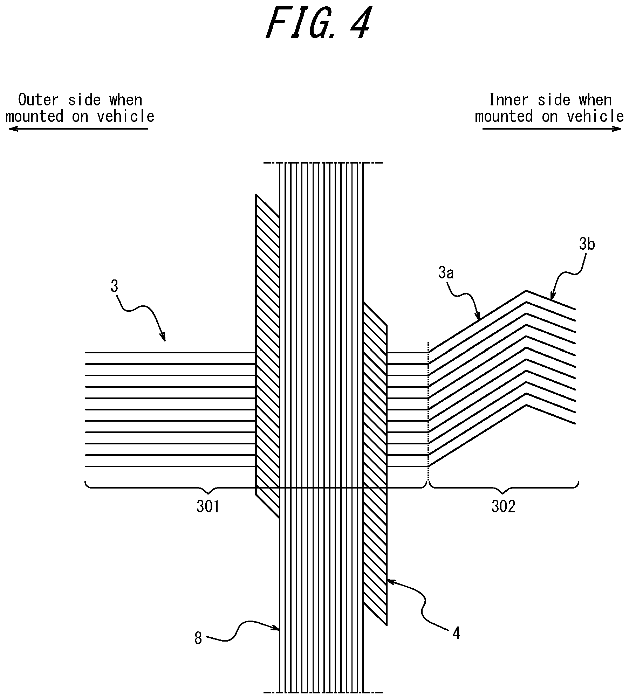

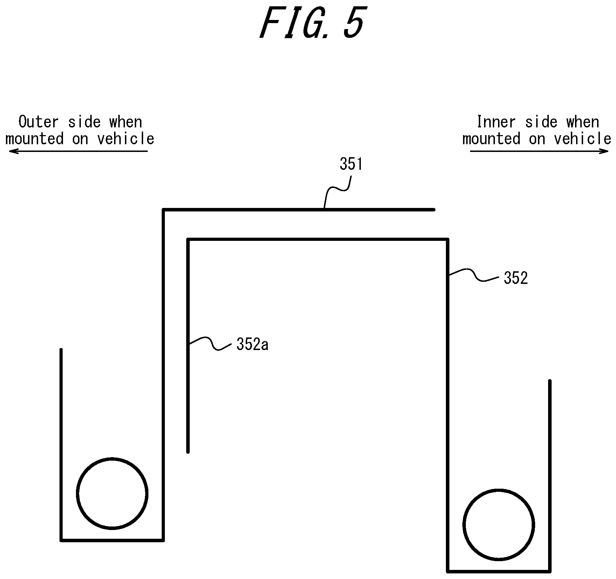

In the example illustrated in Figure 3, the carcass 3 consists of a single carcass ply. On the other hand, in the present disclosure, the number of carcass plies is not particularly limited, and it can be two or more. In addition, as illustrated in Figure 4, the carcass 3 has: a first tire widthwise portion 301 in which the carcass cords are in a radial arrangement; and a second tire widthwise portion 302 in which the carcass cords extend at an angle to the tire circumferential direction, and the second tire widthwise portion 302 is located in a tire width-direction half (in the illustrated example, only part of the tire half) which is on the inner side when the tire is mounted on a vehicle. In the example illustrated in Figure 3, the carcass 3 has a carcass body portion 3a that extends in a toroidal shape between the pair of bead portions 2, and a carcass turn-up portion 3b that is folded back from the carcass body portion 3a around the bead core 2a. The carcass body portion 3a extends from the bead portion 2 to the inner side in the tire radial direction of the belt 4. On the other hand, in the present disclosure, the carcass turn-up portion 3b can be wound around the bead core 2a, or can be sandwiched between a plurality of divided small bead cores. The end 3c of the carcass turn-up portion 3b is located on the outer side in the tire radial direction than the tire radially-outer end of the bead filler 2b, and is located on the inner side in the tire radial direction than the tire maximum width position. This makes it possible to reduce the weight of the tire while maintaining the rigidity of the sidewall portion. On the other hand, in the present disclosure, the end 3c of the carcass turn-up portion 3b may be located on the inner side in the tire radial direction than the tire radially-outer end of the bead filler 2b, or it may be located on the outer side in the tire radial direction than the tire maximum width position. Alternatively, it can be an envelope structure in which the end 3c of the carcass turn-up portion 3b is located on the inner side in the tire width direction than the end of the belt 4 (for example, the end of the belt layer 4b) so that the end 3c of the carcass turn-up portion 3b is located between the carcass body portion 2a and the belt 4 in the tire radial direction. Furthermore, when the carcass 3 consists of a plurality of carcass plies, the position (e.g. the position in the tire radial direction) of the end 3c of the carcass turn-up portion 3b can be the same or different between the carcass plies. There is no particular limit to the number of the carcass cords per unit width in the carcass 3, but for example, it may be in the range of 20 to 60 per 50 mm. In addition, various structures can be adopted for the carcass line. For example, in the tire radial direction, the carcass maximum width position can be moved closer to the bead portion 2 side or closer to the tread portion 5 side. For example, the carcass maximum width position can be set, from the bead baseline to the outer side in the tire radial direction, in a range of 50% to 90% of the cross-sectional height of the tire. The "radial arrangement" mentioned above refers to an arrangement in which the carcass cords extend at an angle of 85° or more, and preferably 90°, to the tire circumferential direction. As illustrated in Figure 4, due to the folding of the carcass, the inclination direction of the belt cords in the second tire widthwise portion 302 is opposite between the carcass body portion 3a and the carcass turn-up portion 3b, as illustrated in the figure. As illustrated in Figure 3, the carcass 3 can be configured to straddle in a toroidal shape between the pair of bead portions 2. Alternatively, as illustrated schematically in Figure 5, the carcass 3 can be configured to have: a first carcass 351 that extends from the bead portion 2 in a tire width-direction half which is on the outer side when the tire is mounted on a vehicle to the inner side in the tire radial direction of the belt; and a second carcass 352 that extends from the bead portion 2 in a tire width-direction half which is on the inner side when the tire is mounted on a vehicle to the inner side in the tire radial direction of the belt. In addition, in order to improve the rigidity of the tire on the outer side when the tire is mounted on a vehicle, as illustrated in the figure, the second carcass 352 may have a radial extension portion 352a that extends along the first carcass 351 from the outer side to the inner side in the tire radial direction and terminates on the inner side in the tire width direction of the bead portion in the tire width-direction half which is on the outer side when the tire is mounted on a vehicle, or in order to reduce the weight of the tire, the second carcass 352 may be configured without the radial extension portion 352a.

In the tire of this embodiment, it is preferable that the tire has only one inclined belt layer consisting of a belt ply made of rubber-coated belt cords that extend at an angle to a tire circumferential direction, and that the tire widthwise width of the belt layer is 90 to 115 % of the ground contact width, and it is particularly preferable to be 100 to 105 % of the ground contact width. It will be noted that the "ground contact width" refers to the distance between the ground contact edges E in the tire width direction. The "ground contact edge" refers to the two edges in the tire width direction of the ground contact patch of the tire when the tire is mounted on the rim, filled with the prescribed internal pressure, and loaded with the maximum load.

In this embodiment, as the belt cords of the belt layer, it is most preferable to use metal cords, particularly steel cords, but non-metallic cords, for example, organic fiber cords (for example, Kevlar (registered trademark), etc.) can also be used. The steel cords are made primarily of steel, and can also contain various trace elements such as carbon, manganese, silicon, phosphorus, sulfur, copper, and chromium. In this embodiment, the belt cords of the belt layer may be monofilament cords, cords made of a plurality of filaments aligned in parallel, or cords made of a plurality of filaments twisted together. Various twist structures can be used, and the cross-sectional structure, twist pitch, twist direction, and distance between adjacent filaments can also be varied. Furthermore, cords made of twisted filaments of different materials can also be used, and there are no particular restrictions on the cross-sectional structure, and various twist structures such as single twist, layer twist, and multiple twist can be used.

In this embodiment, the inclination angle of the belt cords in the belt layer is preferably 10° or more with respect to the tire circumferential direction. In this embodiment, the inclination angle of the belt cords in the belt layer is preferably in a high angle, specifically 20° or more with respect to the tire circumferential direction, and particularly in the range of 20° to 45° with respect to the tire circumferential direction. This is because by making the inclination angle 20° or more, the rigidity in the tire width direction can be increased, and the steering stability performance, particularly during cornering, can be improved. In addition, this is because it reduces the rolling resistance by reducing the shear deformation of the interlayer rubber.

Here, in this embodiment, as illustrated in Figure 4, the carcass cords of the carcass body portion 3a in the second tire widthwise portion 302 and the belt cords extend in a direction that intersects each other when viewed from the outer side in the tire radial direction. The inclination angle of the carcass cords of the carcass body portion 3a with respect to the tire circumferential direction in the second tire widthwise portion 302 is greater than the inclination angle of the belt cords with respect to the tire circumferential direction. The inclination angle of the carcass cords of the carcass body portion 3a with respect to the tire circumferential direction in the second tire widthwise portion 302 is preferably 70° to 88°, and is more preferably 76° to 84°.

In the illustrated example, the end of the belt 4 is located within the first tire widthwise portion 301. In the illustrated example, the tire widthwise width of the cap layer 8 is smaller than the tire widthwise width of the belt 4.

It is preferable that the position of the inner end in the tire width direction of the second tire widthwise portion 302 is spaced from the end in the tire width direction of the belt 4 (the end in the same tire width-direction half) outward in the tire width direction by 10 to 40% of the tire widthwise width of the belt.

In the illustrated example, the tread rubber that makes up the tread 5 is composed of a single layer. On the other hand, in this embodiment, the tread rubber that makes up the tread 5 may be formed by laminating a plurality of rubber layers in the tire radial direction. The plurality of rubber layers may have different loss tangents, modulus, hardness, glass transition temperatures, materials, and the like. In addition, the ratio of the thickness of the plurality of rubber layers in the tire radial direction may vary in the tire width direction, and also, the bottom of the circumferential main groove, etc., may be made of a rubber layer that differs from the surrounding area. In addition, the tread rubber that makes up the tread 5 may be formed with a plurality of rubber layers that differ in the tire width direction. The plurality of rubber layers may have different loss tangents, modulus, hardness, glass transition temperatures, materials, and the like. In addition, the ratio of the tire widthwise width of the plurality of rubber layers may vary in the tire radial direction, and also, only a limited area, such as only the area near the circumferential main groove, only the area near the ground contact edge, only the shoulder land portion, or only the center land portion, may have a rubber layer that differs from the surrounding area.

The tire 1 of this embodiment has an inner liner 7 on the inner surface 6 of the tire (simply referred to as the tire inner surface 6). The thickness of the inner liner 7 is preferably about 1.5 mm to 2.8 mm. This is because it can effectively reduce the noise inside the car, which is between 80 and 100 Hz. The air permeability coefficient of the rubber composition that makes up the inner liner 7 is preferably $1.0 \times 10^{-14}$ cc·cm/(cm$^2$·s·cmHg) or more, and $6.5 \times 10^{-10}$ cc·cm/(cm$^2$ s·cmHg) or less.

As illustrated in Figure 3, this tire has one or more (in the illustrated example, one) cap layers 8 on the outer side in the tire radial direction of the belt 4.

The cap layer 8 is made up of ribbon-shaped members consisting of rubber-coated cords arranged in approximately parallel and wound spirally in the tire circumferential direction. In the illustrated example, the tire widthwise width of the cap layer 8 is smaller than the tire widthwise width of the belt 4. For the cords of the cap layer 8, for example, organic fiber cords can be used.

The following explains the effects of the pneumatic radial tire for passenger vehicles of this embodiment.

The pneumatic radial tire for passenger vehicles in this embodiment is a tire with narrow-width and large-diameter having a cross-sectional width SW of less than 165 mm, among the tires with narrow-width and large-diameter that satisfies the above relational expression between the cross-sectional width SW and the outer diameter of the tire. According to this tire, air resistance can be reduced in particular, and rolling resistance can also be reduced, so the fuel efficiency of the tire can be improved.

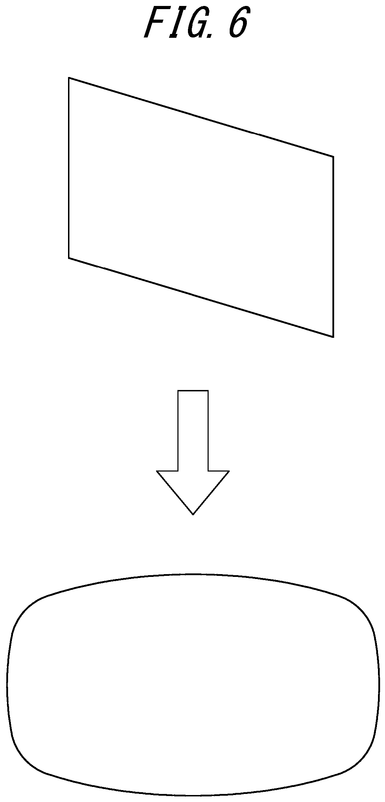

Here, in this embodiment, the tire has a belt that consists of a only one inclined belt layer, thus the tread rubber is less likely to stretch in the direction of the inclination of the belt cords (the direction up to the left and down to the right in Figure 4). In relation to this, the tire of this embodiment further has the first tire widthwise portion 301 in which the carcass cords are in a radial arrangement and a second tire widthwise portion 302 in which the carcass cords extend at an angle to the tire circumferential direction, and the carcass cords of the carcass body portion 3a in the second tire widthwise portion 302 and the belt cords extend in a direction that intersects each other when viewed from the outer side in the tire radial direction. For this reason, the carcass cords of the carcass body portion 3a in the second tire widthwise portion 302 are subject to a force that attempts to restore the radial arrangement, and this can promote the stretching of the tread rubber in the direction of this force (the direction up to the left and down to the right in Figure 4). In this way, it can further reduce the difficulty in stretching the tread rubber in the inclination direction of the belt cords, and as schematically illustrated in Figure 6, the shape of the ground contact patch is improved, resulting in improved steering stability and other driving performance.

Here, it is preferable that the inclination angle of the carcass cords of the carcass body portion 3a with respect to the tire circumferential direction in the second tire widthwise portion 302 is greater than the inclination angle of the belt cords with respect to the tire circumferential direction. This is because by making inclination angle of the carcass cords of the carcass body portion 3a with respect to the tire circumferential direction in the second tire widthwise portion 302 greater than the inclination angle of the belt cords with respect to the tire circumferential direction, it is possible to achieve both the rigidity to support the load and the lateral rigidity, as well as torsional deformation that corrects the shape of the ground contact patch.

In addition, it is preferable that the inclination angle of the carcass cords of the carcass body portion 3a with respect to the tire circumferential direction in the second tire widthwise portion 302 is 70° to 88°. This is because, by setting it to 70° or more, it is possible to achieve both the torsional deformation and the rigidity, while, by setting it to 88° or less, it is possible to generate sufficient restoring force against the torsion. For the same reason, it is even more preferable that the above inclination angle is 76° to 84°.

In addition, it is preferable that the position of the inner end in the tire width direction of the second tire widthwise portion 302 is spaced from the end in the tire width direction of the belt 4 outward in the tire width direction by 10 to 40% of the tire widthwise width of the belt 4. This is because, by setting it to 10% or more, the effect of correcting the shape of the ground contact patch can be obtained for the entire tire width-direction half which is on the inner side when the tire is mounted on a vehicle, while, by setting it to 40% or less, both the torsional deformation and the rigidity can be achieved. For the same reason, it is further preferable that the position of the inner end in the tire width direction of the second tire widthwise portion 302 is spaced from the end in the tire width direction of the belt 4 outward in the tire width direction by 20 to 30% of the tire widthwise width of the belt 4.

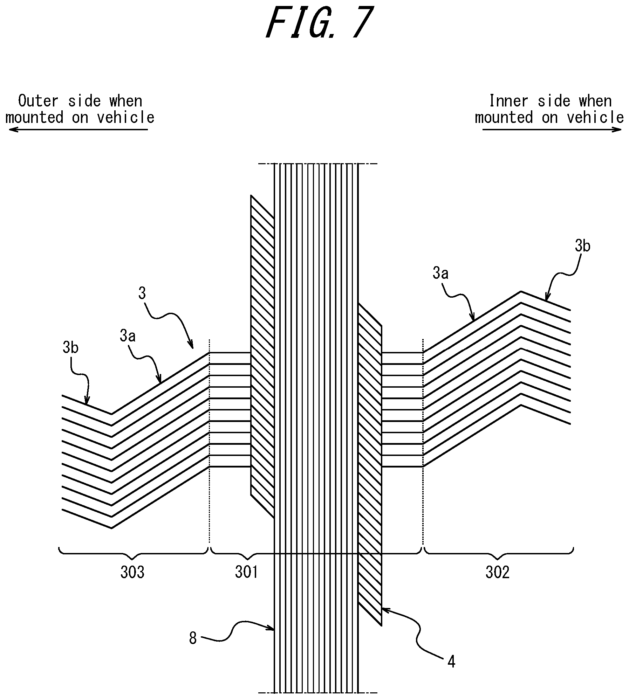

As illustrated in Figure 7, it is preferable that the carcass further has a third tire widthwise portion 303 that is different from the second tire widthwise portion 302 in which the carcass cords extend at an angle to the tire circumferential direction, the third tire widthwise portion 303 is located in a tire width-direction half which is on the outer side when the tire is mounted on a vehicle, and the carcass cords of the carcass body portion 3a in the third tire widthwise portion 303 and the belt cords extend in a direction that intersects each other when viewed from the outer side in the tire radial direction. Even in the tire width-direction half which is on the outer side when the tire is mounted on a vehicle, the force that attempts to restore the radial arrangement of the carcass cords in the carcass main body 3a in the third tire widthwise portion 303 has the effect of promoting the stretching of the tread rubber in the direction of the force (the direction up to the left and down to the right in Figure 7), and it can further reduce the difficulty in stretching the tread rubber in the inclination direction of the belt cords. Therefore, the shape of the ground contact patch can be further improved to further improve the driving performance.

It will be noted that, the pneumatic radial tire for passenger vehicles may be mounted on the right wheel of the vehicle, and the belt cords can extend from the lower right to the upper left when viewed from the outer side in the tire radial direction (Figure 7), or may be mounted on the left wheel of the vehicle, and the belt cords can extend from the lower left to the upper right when viewed from the outer side in the tire radial direction.

In addition, the carcass 3 may straddle in a toroidal shape between the pair of bead portions 2, alternately, the carcass 3 may have a first carcass 351 that extends from the bead portion 2 in the tire width-direction half which is on the outer side when the tire is mounted on a vehicle to the inner side in the tire radial direction of the belt 4, and a second carcass 352 that extends from the bead portion 2 in the tire width-direction half which is on the inner side when the tire is mounted on a vehicle to the inner side in the tire radial direction of the belt 4.

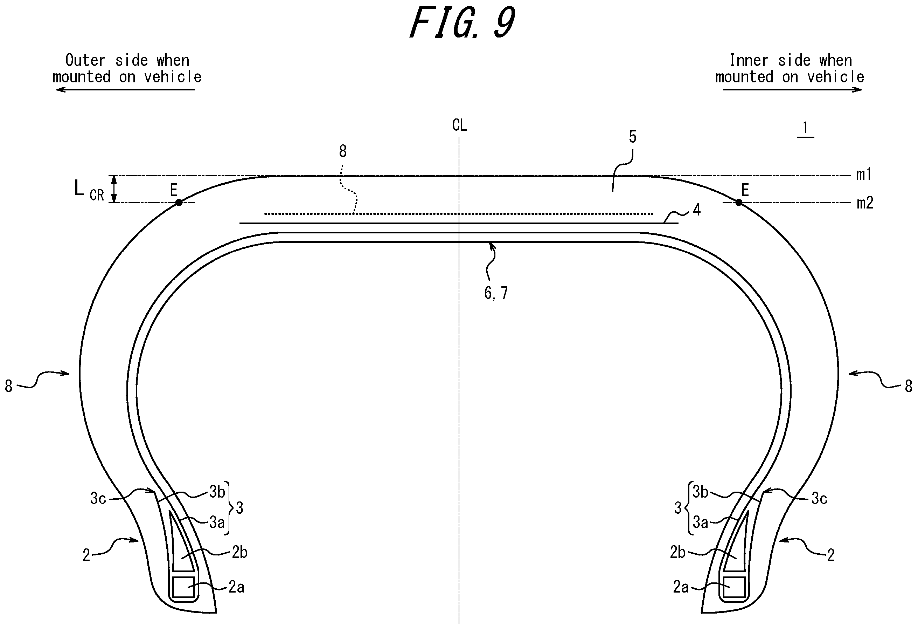

In addition, as illustrated in Figure 9, when the distance in the tire radial direction between a straight line m1, which passes through a point on the tread surface at the tire equatorial plane and is parallel to the tire width direction, and a straight line m2, which passes through the ground contact edge E and is parallel to the tire width direction, is defined as drop height $L_{CR}$, and the tread width of the tire is defined as TW, it is preferable that the ratio $L_{CR}/TW$ is greater than 0.045. This allows the crown shape to be relatively round, and thus the shape of the ground contact patch can be made round, with the ground contact length in the shoulder portion shorter than that of the center portion. This prevents the shape of the ground contact patch from becoming too narrow when the angle of the camber changes, and further controls the deterioration of the shape of the ground contact patch. The "ground contact edge" refers to the two edges of the ground contact patch (the part that makes contact with the road surface) of the tire when the tire is mounted on the rim, filled with the prescribed internal pressure, and loaded with the maximum load. The "tread width" refers to the distance between the ground contact edges of the tire when the tire is mounted on the rim, filled with the prescribed internal pressure, and unloaded.

<Tire and rim assembly>

A tire and rim assembly here is formed by mounting the above-mentioned pneumatic radial tire for passenger vehicles on the rim. According to this tire and rim assembly, it is possible to obtain the same effects as those described for the above-mentioned pneumatic radial tire for passenger vehicles. At this time, the internal pressure of the tire and rim assembly is preferably 200 kPa or more, it is more preferable to be 220 kPa or more, and it is even more preferable to be 280 kPa or more. This is because the rolling resistance can be further reduced by increasing the internal pressure. On the other hand, the internal pressure of the tire and rim assembly is preferably 350 kPa or less, as this improves ride comfort.

<Method for using pneumatic radial tire for passenger vehicles>

The method for using the pneumatic radial tire for passenger vehicles uses the above-mentioned pneumatic radial tire for passenger vehicles. According to the method for using the pneumatic radial tire for passenger vehicles, it is possible to obtain the same effects as those described above for the pneumatic radial tire for passenger vehicles. At this time, it is preferable to use it with an internal pressure of 200 kPa or more, and it is even more preferable to use it with an internal pressure of 220 kPa or more, and it is even more preferable to use it with an internal pressure of 280 kPa or more. This is because the rolling resistance can be further reduced by increasing the internal pressure. On the other hand, it is preferable to use it with an internal pressure of 350 kPa or less, as this improves ride comfort.

<Examples with communication device>

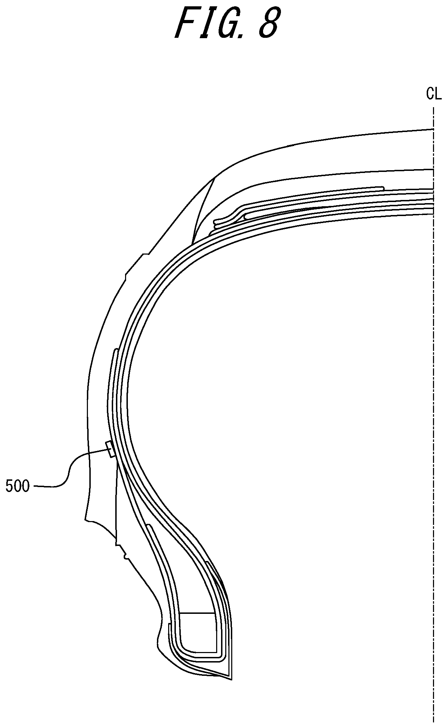

As illustrated in Figure 8, the tire may comprise an RF tag as a communication device 500. The RF tag has an IC chip and an antenna. The RF tag may be arranged, for example, by being sandwiched between a plurality of members of the same type or different types that constitute the tire. In this way, it is easier to attach RF tags when producing tires, and the productivity of tires with RF tags can be improved. In this example, the RF tag may be arranged between, for example, the bead filler and other members adjacent to the bead filler. The RF tag may be embedded in any of the members that constitute the tire. In this way, the load on the RF tag can be reduced compared to when it is arranged by being sandwiched between a plurality of members that constitute the tire, thereby improving the durability of the RF tag. In this example, the RF tag may be embedded in rubber members such as tread rubber and side rubber. It is preferable that the RF tag is not arranged at positions that are boundaries between members with different levels of rigidity in a direction of periphery length, which is the direction along the outer surface of the tire when viewed in cross section in the tire width direction. In this way, the RF tag is not arranged in a position where distortion is likely to be concentrated based on the rigidity step. This reduces the load on the RF tag, thereby improving the durability of the RF tag. In this example, it is preferable that the RF tag is not arranged in a position that is the boundary between, for example, the edge of the carcass and the member (e.g. side rubber, etc.) adjacent to this edge of the carcass when viewed in cross section in the tire width direction. The number of RF tags is not limited. The tire may have only one RF tag, or it may have two or more. Here, an RF tag is described as an example of a communication device, but a communication device other than an RF tag may also be used.

The RF tag may be arranged, for example, in the tread portion of the tire. In this way, the RF tag will not be damaged by the tire side cut. The RF tag may be arranged, for example, in the center of the tread in the tire width direction. The center of the tread is a position where deflection is unlikely to be concentrated in the tread portion. In this way, the load applied on the RF tag can be reduced, thereby improving the durability of the RF tag. This also makes it possible to prevent differences in communication with the RF tag from both outer sides in the tire width direction of the tire. In this example, the RF tag may be arranged, for example, within a range of 1/2 of the tread width with the tire equatorial plane as the center, in the tire width direction. The RF tag may be arranged, for example, at a tread edge portion in the tire width direction. If the position of the reader that communicates with the RF tag is predetermined, the RF tag may be arranged, for example, at the tread edge portion on one side close to this reader. In this example, the RF tag may be arranged, for example, within a range of 1/4 of the tread width, with the tread edge as the outer edge in the tire width direction.

The RF tag may be arranged, for example, on the tire inner-cavity side of the carcass including one or more carcass plies straddling between bead portions. In this way, the RF tag becomes less likely to be damaged by external impacts to the tire, or by damage such as side cuts or nail punctures. As an example, the RF tag may be arranged in close contact with the surface of the carcass facing the inner cavity of the tire. As another example, when there is another member on the tire inner-cavity side of the carcass, the RF tag may be arranged between the carcass and this another member located on the tire inner-cavity side of the carcass. This another member that is located on the tire inner-cavity side of the carcass is, for example, an inner liner, which forms the inner surface of the tire. As another example, the RF tag may be attached to the inner surface of the tire facing the inner cavity of the tire. By attaching the RF tag to the inner surface of the tire, it is easy to attach the RF tag to the tire, and to inspect and replace the RF tag. In other words, the ease of attachment and maintenance of the RF tag can be improved. In addition, by attaching the RF tag to the inner surface of the tire, it is possible to prevent the RF tag from becoming the core of a tire failure, compared to a structure in which the RF tag is embedded inside the tire. In addition, when the carcass has a plurality of carcass plies and there is a position where the plurality of carcass plies are overlapped, the RF tag may be arranged between the overlapped carcass plies.

The RF tag may be arranged, for example, on the outer side in the tire radial direction than a belt consisting of only one belt ply in the tread portion of the tire. As an example, the RF tag may be arranged in close contact with the belt on the outer side in the tire radial direction with respect to the belt. Also, as another example, when a reinforcement belt layer is provided, the RF tag may be arranged in close contact with the reinforcement belt layer on the outer side in the tire radial direction with respect to the reinforcement belt layer. In addition, as another example, the RF tag may be embedded in the tread rubber on the outer side in the tire radial direction than the belt. By disposing the RF tag in the tread portion of the tire on the outer side than the belt, communication with the RF tag from the outside of the tire in the tire radial direction is less likely to be disturbed by the belt. Therefore, communication with the RF tag from the outside of the tire in the tire radial direction can be improved. In addition, the RF tag may be arranged, for example, on the inner side in the tire radial direction than the belt in the tread portion of the tire. In this way, the outer side in the tire radial direction of the RF tag is covered by the belt, so the RF tag becomes less likely to be damaged by impacts from the tread surface or by nail punctures. As an example of this, the RF tag may be arranged between the belt and the carcass which is located on the inner side in the tire radial direction than the belt.

The RF tag may be arranged, for example, at the location in the sidewall portion or the bead portion of the tire. The RF tag may be arranged, for example, on the sidewall portion or the bead portion on one side that is close to the reader that can communicate with the RF tag. This improves communication between the RF tag and the reader. As an example, the RF tag may be arranged between the carcass and the side rubber, or between the tread rubber and the side rubber. The RF tag may be arranged, for example, between the tire maximum width position and the tread surface position in the tire radial direction. With this configuration, compared to a configuration in which the RF tag is arranged on the inner side in the tire radial direction than the tire maximum width position, communication with the RF tag from the outside of the tire in the tire radial direction can be improved. The RF tag may be arranged, for example, on the inner side in the tire radial direction than the tire maximum width position. With this configuration, the RF tag is arranged near the bead portion having high rigidity. This reduces the load applied on the RF tag, thereby improving the durability of the RF tag. As an example, the RF tag may be arranged in a position adjacent to the bead core in the tire radial direction or the tire width direction. Distortion is less likely to concentrate near the bead core, which reduces the load on the RF tag, thereby improving the durability of the RF tag. In particular, it is preferable that the RF tag is arranged on the inner side in the tire radial direction than the tire maximum width position and on the outer side in the tire radial direction than the bead core of the bead portion. With this configuration, as well as the durability of the RF tag can be improved, the communication between the RF tag and the reader is less likely to be disturbed by the bead core, so the communication performance of the RF tag can be improved. In addition, when the side rubber is composed of a plurality of rubber members of the same or different types that are adjacent to each other in the tire radial direction, the RF tag may be arranged sandwiched between the plurality of rubber members that constitute the side rubber. The RF tag may be arranged, for example, on the outer surface of the side rubber.

The RF tag may be arranged, for example, sandwiched between the bead filler and the member adjacent to the bead filler. According to this configuration, it is possible to place the RF tag in a position where the strain is less likely to be concentrated due to the disposal of the bead filler. This reduces the load applied on the RF tag, thereby improving the durability of the RF tag. The RF tag may be arranged, for example, between the bead filler and the carcass. The part of the carcass where the RF tag is sandwiched between the carcass and the bead filler may be located on the outer side in the tire width direction with respect to the bead filler, or on the inner side in the tire width direction with respect to the same. If the part of the carcass where the RF tag is sandwiched between the carcass and the bead filler is located on the outer side in the tire width direction with respect to the bead filler, the load applied to the RF tag due to impact or damage from the outside in the tire width direction of the tire can be reduced even more, thereby improving the durability of the RF tag. In addition, the bead filler may have a portion that is arranged adjacent to the side rubber. In such a case, the RF tag may be arranged sandwiched between the bead filler and the side rubber. Furthermore, the bead filler may also have a portion that is arranged adjacent to the rubber chaffer. In such a case, the RF tag may be arranged sandwiched between the bead filler and the rubber chaffer.

The RF tag may be arranged, for example, sandwiched between the rubber chaffer and the side rubber. According to this configuration, it is possible to place the RF tag in a position where the strain is less likely to be concentrated due to the placement of the rubber chaffer. This reduces the load applied on the RF tag, thereby improving the durability of the RF tag. The RF tag may be arranged, for example, sandwiched between the rubber chaffer and the carcass. According to this configuration, it is possible to reduce the load applied on the RF tag due to impact and damage from the rim. Therefore, the durability of the RF tag can be improved.

The RF tag may be arranged, for example, sandwiched between the wire chaffer and another member that is adjacent to the wire chaffer on the inner side or the outer side in the tire width direction thereof. According to this configuration, the position of the RF tag is less likely to change when the tire is deformed. This reduces the load applied on the RF tag when the tire is deformed, thereby improving the durability of the RF tag. The other member that is adjacent to the wire chaffer on the inner side or the outer side in the tire width direction may be a rubber member, such as a rubber chaffer. Also, the other member that is adjacent to the wire chaffer on the inner side or the outer side in the tire width direction may be a carcass.

A belt reinforcement layer may be provided on the outer side in the tire radial direction of the belt. For example, the belt reinforcement layer may be made by continuously spiraling a cord made of polyethylene terephthalate around the tire in the tire circumferential direction. The code is made by applying adhesive treatment under a tension of $6.9 \times 10^{-2}$ N/tex or more, and the elastic modulus at a load of 29.4 N measured at 160°C may be 2.5 mN/dtex% or more. In addition, the belt reinforcement layer may be arranged to cover the entire belt, or it may be arranged to cover only the two ends of the belt. Furthermore, the winding density per unit width of the belt reinforcement layer may vary depending on the position in the width direction. According to this configuration, it is possible to reduce road noise and flat spots without reducing high-speed durability.

Although the embodiment of the present disclosure has been described above, the present disclosure is not limited to the above embodiment. For example, in the example above, we showed a case with a single cap layer, but it is also possible to have a configuration without a cap layer in order to reduce the weight of the tire.

[Contributing to the United Nations-led Sustainable Development Goals (SDGs)]

The SDGs have been proposed in order to realize a sustainable society. One embodiment of this disclosure is considered to be a technology that can contribute to "No. 7_Affordable and Clean Energy" and "No. 12_Ensure Sustainable Consumption and Production Patterns".

REFERENCE SIGNS LIST

| | |
|---|---|
| 1 | Pneumatic radial tire for passenger vehicle (tire) |
| 2 | Bead portion |
| 2a | Bead core |
| 2b | Bead filler |
| 3 | Carcass |
| 301 | First tire widthwise portion |
| 302 | Second tire widthwise portion |
| 303 | Third tire widthwise portion |
| 4 | Belt |
| 5 | Tread |
| 6 | Tire inner surface |
| 7 | Inner liner, |
| 8 | Cap layer |
| 500 | Communication device |
| CL | Tire equatorial plane |

**Claims**

1. A pneumatic radial tire for passenger vehicles, comprising

a pair of bead portions;
a carcass consisting of one or more carcass plies made of rubber-coated carcass cords; and
a belt consisting of only one inclined belt layer consisting of a belt ply made of rubber-coated belt cords that extend at an angle to a tire circumferential direction, arranged on an outer side in a tire radial direction of a crown portion of the carcass, wherein
a cross-sectional width SW of the tire is less than 165 (mm),
a ratio of the cross-sectional width SW of the tire to an outer diameter OD of the tire is 0.26 or less, or the cross-sectional width SW (mm) of the tire and the outer diameter OD (mm) of the tire satisfy a relational expression:

$$OD \text{ (mm)} \geq -0.0187 \times SW \text{ (mm)}^2 + 9.15 \times SW \text{ (mm)} - 380 \text{ (mm)},$$

the carcass has a first tire widthwise portion in which the carcass cords are in a radial arrangement, and a second tire widthwise portion in which the carcass cords extend at an angle to the tire circumferential direction,
the carcass has a carcass body portion that extends from the bead portion to an inner side in the tire radial direction of the belt,
the second tire widthwise portion is located in a tire width-direction half which is on the inner side when the tire is mounted on a vehicle, and
the carcass cords of the carcass body portion in the second tire widthwise portion and the belt cords extend in a direction that intersects each other when viewed from the outer side in the tire radial direction.

2. The pneumatic radial tire for passenger vehicles as described in claim 1, wherein an inclination angle of the carcass cords of the carcass body portion with respect to the tire circumferential direction in the second tire widthwise portion is greater than an inclination angle of the belt cords with respect to the tire circumferential direction.

3. The pneumatic radial tire for passenger vehicles as described in claim 1 or 2, wherein the inclination angle of the carcass cords of the carcass body portion with respect to the tire circumferential direction in the second tire widthwise portion is 70 to 88°.

4. The pneumatic radial tire for passenger vehicles as described in any one of claims 1 to 3, wherein a position of an inner end in the tire width direction of the second tire widthwise portion is spaced apart outward in the tire width direction from an end in the tire width direction of the belt by 10 to 40% of a tire widthwise width of the belt.

5. The pneumatic radial tire for passenger vehicles as described in any one of claims 1 to 4, wherein

the pneumatic radial tire for passenger vehicles is mounted on a right wheel of a vehicle,
the belt cords extend from the lower right to the upper left when viewed from the outer side in the tire radial direction,
the carcass further has a third tire widthwise portion that is different from the second tire widthwise portion, in which the carcass cords extend at an angle to the tire circumferential direction,
the third tire widthwise portion is located in a tire width-direction half which is on the outer side when the tire is mounted on a vehicle, and
the carcass cords of the carcass body portion in the third tire widthwise portion and the belt cords extend in a direction that intersects each other when viewed from the outer side in the tire radial direction.

6. The pneumatic radial tire for passenger vehicles as described in any one of claims 1 to 5, wherein the carcass straddles in a toroidal shape between the pair of bead portions.

7. The pneumatic radial tire for passenger vehicles as described in any one of claims 1 to 5, wherein the carcass has a first carcass that extends from the bead portion in a tire width-direction half which is on the outer side when the tire is mounted on a vehicle to the inner side in the tire radial direction of the belt, and a second carcass that extends from the bead portion in a tire width-direction half which is on the inner side when the tire is mounted on a vehicle to the inner side in the tire radial direction of the belt.

# *FIG. 1*

Belt cord

Shape of ground contact patch

# FIG. 2

# FIG. 3

Outer side when
mounted on vehicle
←

Inner side when
mounted on vehicle
→

CL

8

5

1

4

6, 7

8

8

3c
3b
3a
3

2

2b

2a

3b
3a
3

3c

2b

2

2a

# FIG. 4

Outer side when
mounted on vehicle

Inner side when
mounted on vehicle

3

3a

3b

301

302

8

4

# FIG. 5

Outer side when
mounted on vehicle
←

Inner side when
mounted on vehicle
→

351

352

352a

# *FIG. 6*

# FIG. 7

Outer side when
mounted on vehicle

Inner side when
mounted on vehicle

# FIG. 8

500

CL

*FIG. 9*

## INTERNATIONAL SEARCH REPORT

| | International application No. |
|---|---|
| | **PCT/JP2023/022620** |

**A. CLASSIFICATION OF SUBJECT MATTER**

**B60C 9/17**(2006.01)i; **B60C 5/00**(2006.01)i; **B60C 9/07**(2006.01)i
FI:   B60C9/17; B60C9/07; B60C5/00 H

According to International Patent Classification (IPC) or to both national classification and IPC

**B. FIELDS SEARCHED**

Minimum documentation searched (classification system followed by classification symbols)

B60C5/00, B60C9/00-9/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/161296 A1 (BRIDGESTONE CORPORATION) 31 October 2013 (2013-10-31)<br>entire text | 1-7 |
| A | JP 2013-63765 A (BRIDGESTONE CORPORATION) 11 April 2013 (2013-04-11)<br>entire text | 1-7 |
| A | JP 2015-37924 A (YOKOHAMA RUBBER CO LTD) 26 February 2015 (2015-02-26)<br>entire text | 1-7 |
| A | WO 2017/195891 A1 (YOKOHAMA RUBBER CO LTD) 16 November 2017 (2017-11-16)<br>entire text | 1-7 |
| A | JP 2015-85754 A (BRIDGESTONE CORPORATION) 07 May 2015 (2015-05-07)<br>entire text | 1-7 |
| A | WO 2015/182152 A1 (BRIDGESTONE CORPORATION) 03 December 2015 (2015-12-03)<br>entire text | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/022620**

| Patent document cited in search report | | | Publication date (day/month/year) | Patent family member(s) | | | Publication date (day/month/year) |
|---|---|---|---|---|---|---|---|
| WO | 2013/161296 | A1 | 31 October 2013 | US | 2015/0122392 | A1 | |
| | | | | EP | 2842765 | A1 | |
| | | | | CN | 104245358 | A | |
| | | | | BR | 112014026592 | A | |
| | | | | IN | 8482DEN2014 | A | |
| JP | 2013-63765 | A | 11 April 2013 | US | 2014/0209228 | A1 | |
| | | | | WO | 2013/031167 | A1 | |
| | | | | EP | 2810790 | A1 | |
| | | | | CN | 103889739 | A | |
| JP | 2015-37924 | A | 26 February 2015 | (Family: none) | | | |
| WO | 2017/195891 | A1 | 16 November 2017 | US | 2019/0143754 | A1 | |
| | | | | CN | 109070641 | A | |
| JP | 2015-85754 | A | 07 May 2015 | US | 2016/0257169 | A1 | |
| | | | | WO | 2015/063972 | A1 | |
| | | | | EP | 3064374 | A1 | |
| | | | | CN | 105682942 | A | |
| WO | 2015/182152 | A1 | 03 December 2015 | US | 2017/0197465 | A1 | |
| | | | | EP | 3130479 | A1 | |
| | | | | CN | 106457915 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011135774 A1

- JP 2020093674 A